# FASCICULE DE BREVET EUROPEEN

(11) **EP 1 058 323 B1**
(45) Date de publication et mention de la délivrance du brevet: **22.02.2006**
(21) Numéro de dépôt: 99401358.9
(22) Date de dépôt: 04.06.1999
(51) Int. Cl.: H01L 41/09

(54) **Contacteur-disjoncteur actionné par un moteur piezo-électrique**
Durch einen piezoelektrischen Motor angetriebenen Schalter
Contactor/circuit breaker actuated by a piezoelectric motor

(43) Date de publication de la demande: 06.12.2000
(73) Titulaire: Norbert Beyrard France (SARL), 01220 Divonne-les-Bains (FR)
(72) Inventeur: Beyrard, Norbert, 92200 Neuilly sur Seine (FR)
(74) Mandataire: Moinas, Michel

(56) Documents cités:
- EP-A- 0 163 497
- US-A- 3 989 964
- US-A- 4 976 553

## Description

L'invention est relative à un contacteur disjoncteur monté sur une ligne principale de courant électrique pulsé, de préférence alternatif ainsi que son procédé d'actionnement.

On connaît déjà des contacteurs disjoncteurs comprenant deux types de contact, l'un actif, l'autre passif, dont les contacts actifs sont actionnés par un système électromécanique tel qu'un électroaimant.

De tels appareils sont prévus pour assurer à la fois la mise en et hors service du circuit et sa protection en cas de surintensité dans la ligne principale de courant.

Toutefois, ce type d'appareil ne donne pas parfaitement satisfaction, parce qu'il présente d'une part une inertie mécanique et électrique importante, et d'autre part une sensibilité au champ électromagnétique créé par la ligne de courant principale, ces deux phénomènes empêchant le pilotage précis dans le temps et dans l'espace des contacts mobiles.

Il en résulte l'apparition d'arcs électriques importants lors de l'ouverture des contacts et la limitation de la gamme d'intensité dans laquelle le circuit est protégé.

L'invention vise donc à remédier à ces inconvénients.

Le document EP 163 497 divulgue un contacteur disjoncteur conforme au préambule de la revendication 1.

Les documents US 4 976 553 et US 3 989 964 divulguent d'autres contacteurs-disjoncteurs du même type.

L'invention définie par cette revendication pose dans ces documents le problème de modifier un contacteur-disjoncteur pour obtenir une ouverture ou une fermeture des contacts à un instant précis.

A cet effet, l'invention a pour premier objet un appareil de type contacteur-disjoncteur monté sur une ligne principale de courant pulsé, de préférence alternatif comprenant deux types de contacts, l'un actif, l'autre passif, les contacts actifs étant associés avec des moyens d'actionnement d'ouverture et de fermeture comprenant au moins un moteur piézo-électrique piloté par des moyens de commande, caractérisé en ce que les moyens de commande du moteur piézo-électrique comprennent en série, un déclencheur mécanique et/ou électronique de demande d'ouverture/fermeture de la ligne de courant principale, un dispositif basculeur, une ligne de retard programmable et un générateur électrique alimentant le moteur piézo-électrique.

Dans un mode de réalisation complémentaire, les moyens de commande du moteur piézo-électrique comprennent en série, un dispositif détecteur de surintensité dans la ligne de courant principale, un dispositif basculeur, une ligne de retard programmable et un générateur électrique alimentant le moteur piézo-électrique.

En variante de ces deux modes de réalisation, les moyens de commande du moteur piézo-électrique comprennent, un seul dispositif basculeur, une seule ligne de retard programmable et un seul générateur électrique alimentant le moteur piézo-électrique.

Le dispositif basculeur comprend un moyen de détection de l'intensité et/ou de la tension de la ligne de courant principale et un comparateur qui alimente le circuit de commande du moteur piézo-électrique lorsque la valeur de l'intensité et/ou de la tension détectée est égale à une certaine valeur référence.

Le dispositif détecteur de surintensité dans la ligne de courant principale comprend un moyen de détection de l'intensité de la ligne de courant principale et un comparateur qui alimente le circuit de commande du moteur piézo-électrique lorsque la valeur de l'intensité détectée est supérieure ou égale à une certaine valeur seuil.

L'invention s'étend à un procédé d'actionnement d'un appareil selon la revendication 9, dans lequel le circuit principal étant fermé, il comprend les étapes successives suivantes :
- déclenchement mécanique et/ou électronique de la demande d'ouverture de la ligne de courant principale ;
- détection de l'intensité de la ligne de courant principale ;
- basculement au premier passage de l'intensité de la ligne de courant principale à la valeur référence ;
- alimentation de la ligne de retard préalablement programmée en fonction de la valeur référence et de la vitesse de déplacement du moteur piézo-électrique ;
- alimentation du générateur électrique ;
- déclenchement de l'ouverture des contacts à un instant où l'intensité dans la ligne de courant principale est égale à une certaine valeur, notamment voisine de zéro.

Lorsque le circuit principal est ouvert, le procédé d'actionnement comprend les étapes successives suivantes :
- déclenchement mécanique et/ou électronique de la demandé de fermeture de la ligne de courant principale;
- détection de la tension de la ligne de courant principale;
- basculement au premier passage de la tension de la ligne de courant principale à la valeur référence ;
- alimentation de la ligne de retard préalablement programmée en fonction de la valeur référence et de la vitesse de déplacement du moteur piézo-électrique :
- alimentation du générateur électrique ;
- déclenchement de la fermeture des contacts à un instant où la tension dans la ligne de courant principale est égale à une certaine valeur, notamment voisine de zéro.

En variante, lorsque le circuit principal est fermé, le procédé d'actionnement comprend les étapes successives suivantes :
- détection de l'intensité de la ligne de courant principale ;
- comparaison de la valeur de l'intensité mesurée à une valeur seuil ; si la valeur de l'intensité mesurée sur la ligne de courant principale est supérieure à la valeur seuil :
- basculement au premier passage de l'intensité de la ligne de courant principale à la valeur référence ;
- alimentation de la ligne de retard préalablement programmée en fonction de la valeur référence et de la vitesse de déplacement du moteur piézo-électrique ;
- alimentation du générateur électrique ;
- déclenchement de l'ouverture des contacts à un instant où l'intensité dans la ligne de courant principale est égale à une certaine valeur, notamment voisine de zéro.

Différents organes d'actionnement sont utilisables par un contacteur-disjoncteur selon l'invention. Les exemples qui suivent n'entrent dans l'objet de la protection qu'en combinaison avec les moyens de commande définis par la revendication 1.

Selon une première variante, le moteur piézo-électrique est un moteur linéaire et les contacts actifs sont associés à une extrémité d'un bras porte-contact monté en rotation autour d'un axe, les moyens d'actionnement étant disposés à proximité de la seconde extrémité du bras porte-contact.

Selon une deuxième variante, le moteur piézo-électrique est un moteur rotatif et les contacts actifs sont associés à une extrémité d'un bras porte-contact monté en rotation autour d'un axe, les moyens d'actionnement étant sur l'axe de rotation du bras porte-contact.

Dans ces deux variantes un ressort de rappel peut être est associé à l'extrémité du bras porte-contact située du côté opposé aux contacts actifs par rapport à l'axe de rotation.

Dans un mode de réalisation, les moyens d'actionnement des contacts actifs comprennent deux moteurs linéaires piézo-électriques, l'un pour l'ouverture, l'autre pour la fermeture.

Selon une variante les contacts actifs sont associés à une extrémité d'un bras porte-contact monté en rotation autour d'un axe, l'un des moteurs linéaires piézo-électriques étant disposé du même côté de l'axe de rotation que les contacts actifs, et l'autre étant disposé à proximité de la seconde extrémité du bras porte-contact. Un ressort de rappel est associé au bras porte-contact pour faciliter l'ouverture et la fermeture des contacts par les moyens d'actionnement.

Dans un autre mode de réalisation, les contacts passifs sont montés en translation sur un ressort suivant l'axe de déplacement des contacts actifs.

D'autres objets et avantages de l'invention apparaîtront au cours de la description qui suit en référence aux dessins annexés, illustrant divers modes de réalisation, dessins dans lesquels :
- la figure 1 est une vue simplifiée d'un moteur piézo-électrique à vibration elliptique utilisable selon l'invention. Cet exemple est connu en soi de la demande EP-A-0 633 616.
- la figure 2 représente la déformation de l'élément piézo-électrique d'un tel moteur induite par le courant d'excitation.
- la figure 3 représente de façon schématique un deuxième mode de réalisation d'un moteur piézo-électrique utilisable dans l'invention. Cet exemple est décrit en soi dans la demade EP 00401352, laquelle revendique la priorité d'un premier dépôt effectué le même jour que le dépôt de la présente demande.
- la figure 4 représente un mode de réalisation d'un contacteur disjoncteur suivant l'invention, actionné par un moteur piezo-électrique linéaire.
- la figure 5 représente un autre mode de réalisation d'un contacteur disjoncteur suivant l'invention, actionné par deux moteurs piézo-électriques linéaires.
- la figure 6 représente un schém fonctionnel des moyens de commande d'un des moteurs piézo-électriques à un contacteur disjoncteur selon le premier ou le deuxième mode de réalisation.

Un contacteur disjoncteur 1 comprend deux types de contact, l'un actif 2 et l'autre passif 3, et des moyens d'actionnement 4 des contacts actifs 2.

Cet appareil est destiné à être monté sur une ligne principale de courant 5 de circuit électrique pour assurer sa mise en et hors service, et d'autre part sa protection en cas de surintensité.

Le circuit électrique peut être d'un type quelconque utilisé dans l'industrie électrique et ne sera donc pas décrit plus avant dans cette description.

Les moyens d'actionnement 4 assurent le déplacement des contacts actifs 2, d'une part en une position où ils touchent les contacts passifs 3 afin d'assurer le passage du courant dans le circuit, et d'autre part une position éloignée des contacts passifs 3 pour interrompre l'alimentation électrique du circuit principal. Ces deux états permettant de définir respectivement les situations de circuit fermé et circuit ouvert.

Les moyens d'actionnement 4 des contacts actifs 2 comprennent un moteur piézo-électrique 6 piloté par des moyens de commande 7. La transmission du mouvement du moteur 6 au contacteur actif 2 se faisant par l'intermédiaire d'une pièce mobile 8, 21.

On va maintenant décrire quelques modes de réalisation des différents organes des moyens d'actionnement 4.

Un moteur piézo-électrique 6 utilisable dans l'invention est un moteur à vibration elliptique 9 déplaçant une pièce mobile 8. Un tel moteur est décrit par exemple dans la demande de brevet européen EP-A-0 633 616, déposée par la société NANOMOTION.

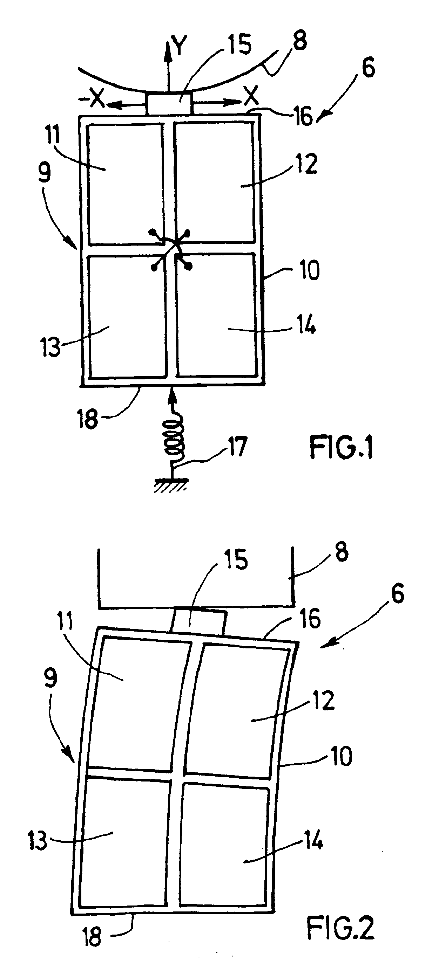

La figure 1 représente schématiquement un tel moteur connu 9 comprenant un parallélépipède rectangle 10 d'une céramique piézo-électrique présentant une faible épaisseur par rapport à sa longueur (direction Y). Quatre électrodes 11, 12, 13, 14 sont disposées sur une première grande face de ce parallélépipède pour former une mire en damier de rectangles, couvrant chacun approximativement un quart de la surface de ladite première face. Les deux électrodes 11, 14 et 12, 13 placées en diagonale l'une par rapport à l'autre sont connectées électriquement par des fils.

La seconde face, opposée à la première, est recouverte entièrement par une seule électrode qui est, par exemple, laissée au potentiel de la masse lors du fonctionnement du moteur 6. Un élément 15 de transmission de mouvement en céramique dure est associé à un des petits côtés 16 (direction X) du parallélépipède rectangle 10 en céramique piézo-électrique. L'élément 15 de transmission de mouvement peut, par exemple, être collé au milieu dudit petit côté 16.

Dans un mode de réalisation de ce type de moteur piézo-électrique 9, un ressort 17 est comprimé sur le petit côté 18 opposé à celui supportant l'élément 15 de transmission. Un tel agencement permettant d'exercer une pression de l'élément 15 de transmission sur la pièce mobile 8.

Le fonctionnement d'un tel moteur 9 est alors obtenu en alimentant l'élément piézo-électrique 10 avec un courant de fréquence capable d'exciter ces modes de résonance suivant la direction X (DX) et suivant la direction Y (DY).

Pour obtenir un mouvement de la pièce mobile 8 dans le sens X (vers la droite sur la figure 1), les électrodes 12 et 13 sont alimentées avec un tel courant, et les électrodes 11 et 14 sont laissées au potentiel de la masse.

Une telle configuration provoque d'abord la flexion de l'élément piézo-électrique 10 (voir figure 2) sur une partie du cycle du courant. L'élément mobile 8 est alors déplacé dans le sens X grâce à la pression qu'exerce le ressort 17 sur l'élément piézo-électrique 10.

Le temps de réponse du ressort 17 étant inférieur à la fréquence d'excitation de l'élément piézo-électrique 10, l'élément 15 de transmission n'est plus en contact avec la pièce mobile 8 dans la partie du cycle où l'élément piézo-électrique 10 fléchit dans la direction opposée (-X) au mouvement souhaité pour la pièce mobile 8.

La répétition de ce cycle induit une rotation elliptique de l'élément 15 de transmission dans le plan XY. Ce mouvement étant transmis à la pièce mobile 8 pour provoquer son déplacement.

Pour améliorer cette transmission, la zone de la pièce mobile 8 en contact avec l'élément 15 de transmission peut être recouverte d'une plaque de friction en matériau céramique.

Pour obtenir un mouvement de la pièce mobile 8 dans le sens -X, les électrodes 11 et 14 sont alimentées, et les électrodes 12 et 13 sont laissées au potentiel de la masse afin d'obtenir un fléchissement dans le sens inverse de l'élément piézo-électrique 10.

Dans une première variante d'exécution, l'élément mobile 8 est plan suivant la direction X afin d'obtenir un moteur 9 à déplacement linéaire.

Dans une seconde variante d'exécution, l'élément mobile 8 est cylindrique ou sphérique afin d'obtenir un moteur piézo-électrique 9 rotatif.

Dans un exemple de réalisation d'un tel moteur piézo-électrique 9, le parallélépipède piézo-électrique 10 est en PZT (titanate et zirconate de plomb) et a une longueur de 30 mm, une largeur de 7 mm et une épaisseur de 3 mm. Le courant d'alimentation a un potentiel compris entre 30 et 500 V et une fréquence comprise entre 20 et 100 kHz.

De tels moteurs 9, fabriqués notamment par la société NANOMOTION, peuvent déplacer un élément mobile 8 en translation à une vitesse supérieure à 30 cm/s en appliquant une force de 15 newtons.

Cette force peut être augmentée en mettant en parallèle plusieurs de ces moteurs 9, agissant simultanément, de sorte à permettre des efforts pouvant atteindre plusieurs centaines de newtons.

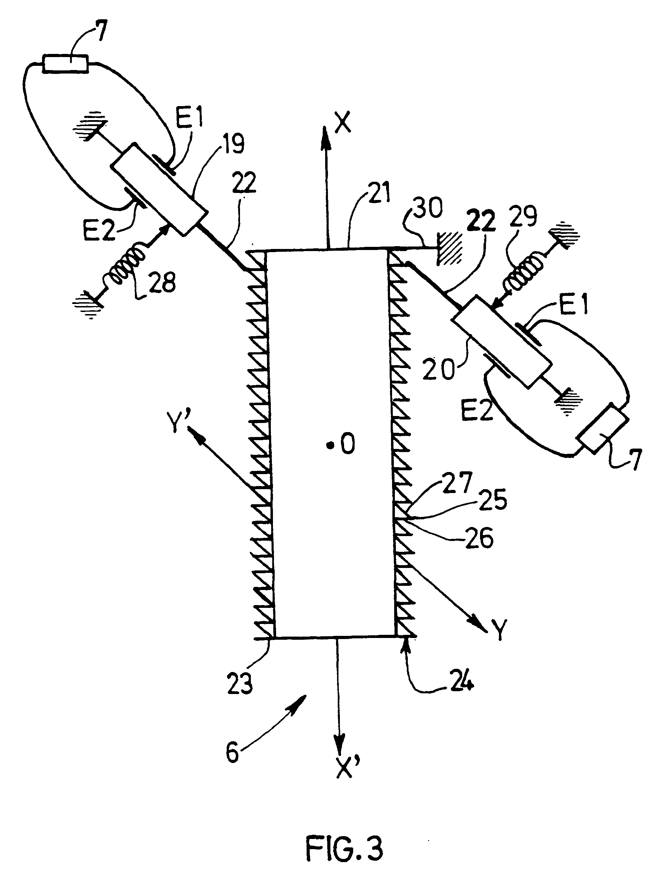

La figure 3 présente de façon schématique un deuxième mode de réalisation d'un moteur piézo-électrique connu 6 utilisable dans l'invention.

Il comprend deux barrettes 19, 20 en céramique piézo-électrique, disposées de part et d'autre d'un élément mobile 21 en translation suivant la direction XX'. Chacune de ces barrettes 19, 20 étant alimentée en électricité par deux électrodes E1 et E2.

Sur l'extrémité de ces barrettes 19, 20 qui se trouve en regard de l'élément mobile 21, est disposé une tige de transmission 22 de la déformation des barrettes.

L'élément mobile 21 est de forme parallélépipédique rectangle et présente deux micro crémaillères 23, 24 s'étendant dans la direction XX' de chaque côté de la grande longueur de l'élément mobile 21.

Chacune de ces micro crémaillères 23, 24 est formée d'une succession de dièdres 25 présentant une première paroi 26 perpendiculaire à la direction XX' et une seconde paroi 27 formant un angle aigu (direction YY'), par exemple de l'ordre de 45°, avec la dite première paroi 26.

Dans le mode de réalisation représenté, les deux barrettes piézo-électriques 19, 20 sont respectivement disposées suivant la direction YY', c'est à dire parallèlement aux dites secondes parois 27 de chacune des deux micro crémaillères 23, 24.

Les deux micro crémaillères 23, 24 sont agencées par exemple de façon symétrique par rapport au centre O de l'élément mobile 21.

Les deux barrettes piézo-électriques 19, 20 sont alimentées par un courant alternatif de fréquence capable d'exciter leur résonance suivant leur direction YY' (DY).

On obtient ainsi un mouvement de vibration des barrettes piézo-électriques 19, 20 dans la direction YY'.

Dans la partie du cycle où la barrette piézo-électrique 19, 20 s'allonge dans la direction YY', la tige de transmission 22 de la déformation vient en contact avec la paroi 26 de la micro crémaillère 23, 24 pour provoquer le déplacement de l'élément mobile 21 dans la direction XX'.

Sur la deuxième partie du cycle, la barrette piézo-électrique 19, 20 se contracte pour désengager la tige de transmission 22 de la micro crémaillère 23, 24 le long d'une paroi 27 parallèle à la direction YY' sans provoquer de mouvement substantiel de l'élément mobile 21.

Sur le cycle suivant, la tige de transmission 22 s'engage dans le dièdre 25 suivant de la micro crémaillère 23, 24 pour un mouvement linéaire continu de l'élément mobile 21 dans un sens. Le passage d'un dièdre 25 à l'autre pouvant être facilité par l'action d'un ressort 28, 29 s'exerçant sur la barrette piézo-électrique 19, 20 dans le sens inverse du déplacement de l'élément mobile 21.

Le principe de fonctionnement d'un tel moteur 6 est alors d'alimenter l'une des barrettes piézo-électrique 20 pour obtenir une translation dans le sens X de l'élément mobile 21, puis le deuxième 19 pour obtenir une translation dans le sens X'.

Dans une variante (non représentée), l'élément mobile 21 d'un tel moteur piézo-électrique 6 peut comprendre une seule micro crémaillère 23 assurant la translation dans le sens X, le retour dans le sens X' de l'élément mobile 21 étant assuré par un ressort prévu à l'une de ses extrémités.

Dans une variante supplémentaire, un cliquet anti-retour 30 à deux positions peut être prévu. Il peut être formé d'une lame flexible s'engageant dans les dièdres 25 successifs lors du déplacement de l'élément mobile 21 et suffisamment rigide pour le maintenir en position lorsque les barrettes piézo-électriques 19, 20 ne sont plus alimentées.

Dans un exemple de réalisation d'un tel moteur piézo-électrique 6, les barrettes piézo-électriques 19, 20 et les tiges de transmission 22 sont en PZT et ont une longueur comprise entre 2 et 20 cm. La profondeur des dièdres 25 des micro crémaillères 23,24 sont de l'ordre de 0,5 à 5 µm. Le courant d'alimentation des éléments piézo-électriques 19, 20 a une tension de l'ordre de 220 V et une fréquence comprise entre 10 et 200 kHz.

De tels moteurs 6 sont capables de fournir des efforts pouvant varier entre 3 et 15 newtons. Ils sont donc plus particulièrement destinés à des contacteurs disjoncteurs 1 de type relais qui fonctionnent pour des intensités nominales de l'ordre de quelques ampères dans le circuit principal.

Dans un mode de réalisation du contacteur disjoncteur 1, les contacts actifs 2 sont associés à une extrémité 31 d'un bras 32 porte contact, monté en rotation autour d'un axe 33 et les contacts passifs 3 sont montés en translation sur un ressort 34 suivant l'axe de déplacement des contacts actifs 2.

Dans un exemple d'exécution, le contacteur disjoncteur 1 est actionné par un moteur piézo-électrique 6 rotatif, le bras porte contact 32 étant associé à l'élément mobile 8 du moteur piézo-électrique 6 pour provoquer sa rotation.

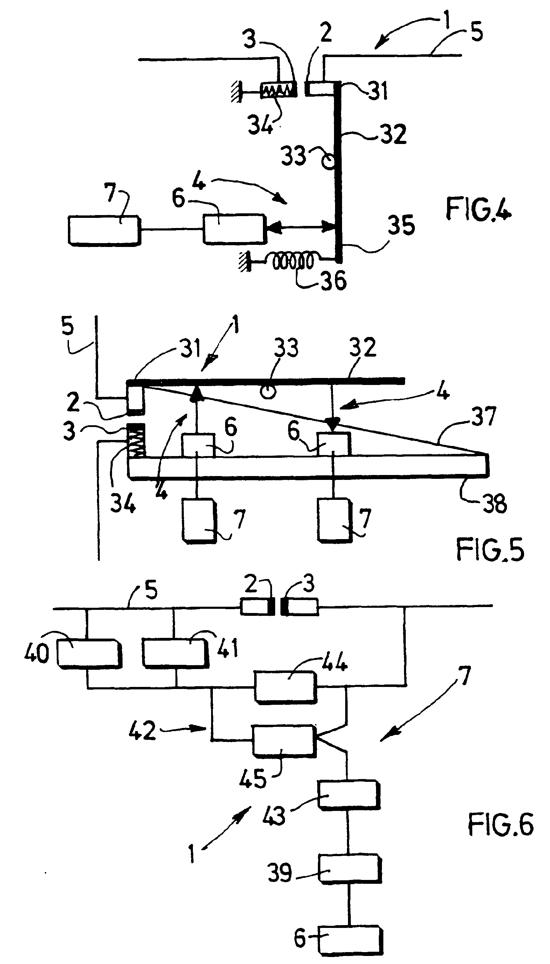

Dans un deuxième exemple d'exécution (voir figure 4), le contacteur disjoncteur 1 est actionné par un moteur piézo-électrique 6 linéaire, l'élément mobile 8, 21 étant disposé à proximité de l'extrémité 35 du bras 32 porte contact opposé au contact actif 2 afin de bénéficier de l'effet de levier.

L'élément mobile 8, 21 peut être soit associé au bras porte contact 32 pour obtenir un actionnement double effet, soit laissé libre. Dans ce cas, un ressort de rappel 36 peut être disposé sur l'extrémité 35 du bras 32 porte contact opposé au contact actif 2.

La fermeture des contacts 2, 3 est alors obtenue en commandant le moteur piézo-électrique 6 linéaire de sorte que, dans un premier temps, il compense l'effort provoqué par le ressort de rappel 36, et dans un deuxième temps, il induise une pression déterminée entre les contacts 2, 3.

On peut ainsi éviter tout rebond des contacts 2, 3 au moment de la fermeture, diminuant de manière évidente les arcs que le rebond peut entraîner.

Lorsque le moteur piézo-électrique 6 linéaire n'est plus alimenté, le ressort de rappel 36 entraînera l'ouverture des contacts 2, 3.

Dans un troisième exemple d'exécution (voir figure 5) le contacteur disjoncteur 1 est actionné par deux moteurs linéaires piézo-électriques 6, l'un pour l'ouverture, l'autre pour la fermeture, disposés de part et d'autre de l'axe 33 de rotation du bras 32 porte contact.

Pour faciliter l'actionnement des contacts 2, 3, un ressort 37 peut être associé de part et d'autre de l'axe 33 de rotation du bras 32 porte contact sur le support 38 des contacts passifs 3 et sur le bras 32 porte contact à proximité des contacts actifs 2.

Cet agencement étant prévu pour que, lorsque les contacts 2, 3 sont fermés, le moteur piézo-électrique linéaire 6 ouvre le circuit jusqu'à ce que l'axe du ressort 37 soit situé dans une position telle qu'il facilite le déplacement des contacts actifs 2 dans le sens de l'ouverture.

Pour la fermeture des contacts, le deuxième moteur piézo-électrique linéaire 6 déplace le bras 32 porte contact jusqu'à ce que le ressort 37 applique une pression dans le sens de la fermeture.

Les moyens de commande 7 du moteur piézo-électrique 6 comprennent un générateur 39 de courant pulsé ou alternatif à une fréquence d'excitation de l'élément piézo-électrique.

Dans un mode de réalisation (voir figure 6), les moyens de commande 7 du moteur piézo-électrique 6 comprennent en série d'une part un déclencheur 40 mécanique et/ou électronique de la demande d'ouverture et un dispositif 41 détecteur de surintensité dans la ligne de courant principal 5 monté en parallèle et d'autre part, un dispositif basculeur 42, une ligne de retard programmable 43 et un générateur électrique 39.

Ce montage permettant d'assurer à la fois la fonction de contacteur et celle de disjoncteur tout en commandant l'ouverture ou la fermeture des contacts 2, 3 à un instant précis.

Dans un exemple d'exécution, le déclencheur 40 de demande d'ouverture/fermeture est un interrupteur mécanique ou électronique. Le détecteur 41 de surintensité est un bilame prévu pour se déclencher lorsque l'intensité de la ligne principale de courant 5 dépasse une certaine valeur seuil, par exemple de l'ordre de quelques fois l'intensité nominale.

Sur la figure 6, le bilame est traversé par un courant de dérivation sur le courant principal. Toutefois, il peut être placé directement dans le courant principal de sorte à ce que sa déformation soit directement déterminée par l'intensité du courant principal.

Le dispositif basculeur 42 comprend une résistance 44 montée en dérivation de la ligne principale de courant 5 de part et d'autre des contacts actifs 2 et passifs 3, de manière à être toujours alimenté par le courant principal, que le circuit soit ouvert ou fermé.

Aux bornes de cette résistance 44, un transistor de commutation inverse à seuil zéro 45 est prévu pour alimenter la ligne de retard 43 lorsque l'intensité du courant est nulle.

La ligne de retard programmable 43 comprend une capacité variable qui est ajustable dans la gamme de temps souhaitée.

Le générateur électrique 39 est un générateur de courant pulsé ou alternatif à une fréquence d'excitation de l'élément piézo-électrique.

Un exemple d'actionnement d'un appareil de type contacteur disjoncteur 1 actionné par un moteur piézo-électrique 6 commandé par un tel circuit est alors le suivant.

Le circuit étant ouvert, on actionne l'interrupteur 40 pour alimenter la résistance 44. Lors du premier passage à tension nulle, le transistor 45 alimente la ligne de retard 43.

Dans le cas où la fréquence du courant de la ligne principale est de 50 Hz, et le temps du déplacement du moteur piézo-électrique 6 pour provoquer l'actionnement du contacteur disjoncteur 1 est de 3 ms, la ligne de retard 43 est alors programmée pour provoquer un retard de 7 ms.

En effet, la durée d'un demi cycle d'un courant de 50 Hz est de 10 ms. L'alimentation du moteur se fait donc 3 ms avant que le courant ne repasse par zéro.

Dans cette configuration, la fermeture des contacts 2, 3 se fait donc à tension nulle.

Lorsque le circuit est fermé, soit l'interrupteur 40 (contacteur), soit le bilame 41 (disjoncteur) peuvent alimenter la résistance 44.

La ligne de retard 43 étant toujours programmée à 7 ms et le déplacement du moteur piézo-électrique 6 étant de 3 ms, l'ouverture des contacts 2, 3 se produit à intensité nulle, ce qui limite la formation d'arcs électriques.

Grâce à la grande précision d'actionnement dans le temps et dans l'espace des moteurs piézo-électriques 6 commandés, on peut ainsi obtenir un contacteur disjoncteur 1 qui fonctionne à la fois dans la gamme d'intensité nominale du courant principal et dans la gamme de « court-circuit » ouvrant ou fermant le circuit à intensité nulle, de préférence en une demi période, de façon à limiter la création d'un arc électrique et le passage d'une intensité dangereuse pour les circuits contrôlés.

## Revendications

1. Appareil de type contacteur-disjoncteur (1) monté sur une ligne principale de courant pulsé, de préférence alternatif (5), comprenant deux types de contacts, actif(s) (2) et passif(s) (3), les contacts actifs (2) étant associés avec des moyens d'actionnement (4) d'ouverture et de fermeture, les moyens d'actionnement (4) comprenant au moins un moteur piézo-électrique (6) piloté par des moyens de commande 7), **caractérisé en ce que** les moyens de commande (7) du moteur piézo-électrique (6) comprennent en série, un déclencheur (40) mécanique et/ou électronique de demande d'ouverture/fermeture de la ligne de courant principale (5), un dispositif basculeur (42), une ligne de retard programmable (43) et un générateur électrique (39) alimentant le moteur piézo-électrique (6).

2. Appareil selon la revendication 1, **caractérisé en ce qu'**un dispositif (41) détecteur de surintensité dans la ligne de courant principale (5) est monté en parallèle avec le déclencheur (40).

3. Appareil selon la revendication 2, **caractérisé en ce que** les moyens de commande (7) du moteur piézo-électrique (6) comprennent, un seul dispositif basculeur (42), une seule ligne de retard programmable (43) et un seul générateur électrique (39) alimentant le moteur piézo-électrique (6).

4. Appareil selon l'une quelconque des revendications 1 à 3, **caractérisé en ce que** le dispositif basculeur (42) comprend un moyen de détection (44) de l'intensité et/ou de la tension de la ligne de courant principale et un comparateur (45) qui alimente le circuit de commande du moteur piézo-électrique (6) lorsque la valeur de l'intensité et/ou de la tension détectée est égale à une certaine valeur référence.

5. Appareil selon l'une quelconque des revendications 2 à 4, **caractérisé en ce que** le dispositif détecteur (41) de surintensité dans la ligne de courant principale comprend un moyen de détection de l'intensité de la ligne de courant principale et un comparateur qui alimente le circuit de commande du moteur piézo-électrique lorsque la valeur de l'intensité détectée est supérieure ou égale à une certaine valeur seuil.

6. Appareil selon la revendication 1, **caractérisé en ce que** le moteur piézo-électrique (6) est un moteur linéaire.

7. Appareil selon la revendication 1, **caractérisé en ce que** le moteur piézo-électrique (6) est un moteur rotatif.

8. Appareil selon la revendication 6, **caractérisé en ce que** les contacts actifs (2) sont associés à une extrémité (31) d'un bras (32) porte-contact monté en rotation autour d'un axe (33), les moyens d'actionnement (4) étant disposés à proximité de la seconde extrémité (35) du bras (32) porte-contact.

9. Appareil selon la revendication 7, **caractérisé en ce que** les contacts actifs (2) sont associés à une extrémité (31) d'un bras (32) porte-contact monté en rotation autour d'un axe (33), les moyens d'actionnement (4) étant sur l'axe (33) de rotation du bras (32) porte-contact.

10. Appareil selon l'une quelconque des revendications 8 ou 9, **caractérisé en ce qu'**un ressort de rappel (36) est associé à l'extrémité (35) du bras (32) porte-contact située du côté opposé aux contacts actifs (2) par rapport à l'axe (33) de rotation.

11. Appareil selon la revendication 1, **caractérisé en ce que** les moyens d'actionnement (4) des contacts actifs (2) comprennent deux moteurs linéaires piézo-électriques (6), l'un pour l'ouverture, l'autre pour la fermeture.

12. Appareil selon la revendication 11, **caractérisé en ce que** les contacts actifs (2) sont associés à une extrémité (31) d'un bras (32) porte-contact monté en rotation autour d'un axe (33), l'un des moteurs (6) linéaires piézo-électriques étant disposé du même côté de l'axe (33) de rotation que les contacts actifs (2), et l'autre étant disposé à proximité de la seconde extrémité du bras (32) porte-contact.

13. Appareil selon la revendication 12, **caractérisé en ce qu'**un ressort de rappel (37) est associé au bras (32) porte-contact pour faciliter l'ouverture et la fermeture des contacts (2, 3) par les moyens d'actionnement (4).

14. Appareil selon l'une quelconque des revendications 1 à 13, **caractérisé en ce que** les contacts passifs (3) sont montés en translation sur un ressort (34) suivant l'axe de déplacement des contacts actifs (2).

15. Procédé d'actionnement d'un appareil selon la revendication 4, **caractérisé en ce que**, le circuit principal étant fermé, il comprend les étapes successives suivantes :
- déclenchement mécanique et/ou électronique de la demande d'ouverture de la ligne de courant principale (5) ;
- détection de l'intensité de la ligne de courant principale (5) ;
- basculement au premier passage de l'intensité de la ligne de courant principale à la valeur référence ;
- alimentation de la ligne de retard (43) préalablement programmée en fonction de la valeur référence et de la vitesse de déplacement du moteur piézo-électrique (6) ;
- alimentation du générateur électrique (39) ;
- déclenchement de l'ouverture des contacts (2, 3) à un instant où l'intensité dans la ligne de courant principale (5) est égale à une certaine valeur, notamment voisine de zéro.

16. Procédé d'actionnement d'un appareil selon la revendication 4, **caractérisé en ce que**, le circuit principal étant ouvert, il comprend les étapes successives suivantes :
- déclenchement mécanique et/ou électronique de la demande de fermeture de la ligne de courant principale (5) ;
- détection de la tension de la ligne de courant principale (5) ;
- basculement au premier passage de la tension de la ligne de courant principale (5) à la valeur référence ;
- alimentation de la ligne de retard (43) préalablement programmée en fonction de la valeur référence et de la vitesse de déplacement du moteur piézo-électrique (6) ;
- alimentation du générateur électrique (39) ;
- déclenchement de la fermeture des contacts (2, 3) à un instant où la tension dans la ligne de courant principale (5) est égale à une certaine valeur, notamment voisine de zéro.

17. Procédé d'actionnement d'un appareil suivant la revendication 5, **caractérisé en ce que**, le circuit principal étant fermé, il comprend les étapes successives suivantes :
- détection de l'intensité de la ligne de courant principale (5) ;
- comparaison de la valeur de l'intensité mesurée à une valeur seuil ;
si la valeur de l'intensité mesurée sur la ligne de courant principale (5) est supérieure à la valeur seuil:
- basculement au premier passage de l'intensité de la ligne de courant (5) principale à la valeur référence ;
- alimentation de la ligne de retard (43) préalablement programmée en fonction de la valeur référence et de la vitesse de déplacement du moteur piézo-électrique (6) ;
- alimentation du générateur électrique (39) ;
- déclenchement de l'ouverture des contacts (2, 3) à un instant où l'intensité dans la ligne de courant principale (5) est égale à une certaine valeur, notamment voisine de zéro.

## Claims

1. A contactor/circuit breaker mechanism (1) mounted on a main, pulsating power line, preferably alternating (5), comprising two types of contact, one active (2), the other passive (3) the active contact being associated with opening and closing activation means (4), said opening and closing activation means (4) comprising at least one piezoelectric motor (6) driven by control means (7), **characterised in that** the control means (7) comprise, in series, a mechanical and/or electronic trigger circuit (40) for requesting opening and closing of the main power line (5), a switching device (42), a programmable delay line (43) and an electric generator (39) energizing the piezoelectric motor (6).

2. A mechanism according to claim 1, **characterised in that** a device (41) for detecting overcurrent in the main power line (5), is mounted in parallel with the trigger circuit (40).

3. A mechanism according to claim 1, **characterised in that** the control means (7) of th piezoelectric motor (6) comprises a single switching device (42), a single programmable delay line (43) and a single electric generator (39) energizing the piezoelectric motor (6).

4. A mechanism according to anyone of claims 1 to 3, **characterised in that** the switching device (42) comprises means (44) for detecting the current and/or voltage of the main power line and a comparator (45) which energizes the control circuit of the piezoelectric motor (6) when the value of the current and voltage detected exceeds a reference value.

5. A mechanism according to anyone of claims 2 to 4, **characterised in that** the device (41) for detecting overcurrent in the main power line comprises means for detecting the current in the main power line and a comparator which energizes the control circuit of the piezoelectric motor when the value of the current detected is equal or greater than a certain threshold value.

6. A mechanism according to claim 1, **characterised in that** the piezoelectric motor is a linear motor (6) is a linear motor.

7. A mechanism according to claim 1, **characterised in that** the piezoelectric motor (6) is a rotary motor.

8. A mechanism according to claim 6, **characterised in that** the active contacts (2) are associated with a first end (31) of a contact carrier arm (32) disposed for rotation with respect to an axis (33), the activation means (4) being positioned proximate a second end (35) of the contact carrier arm (32).

9. A mechanism according to claim 6, **characterised in that** the active contacts (2) are associated with a first end (31) of a contact carrier arm (32) disposed for rotation with respect to an axis (33), the activation means (4) being said rotation axis (33) of said contact carrier arm (32).

10. A mechanism according to claim 8 or 9, **characterised by** the fact that a return spring (36) is associated with the end (35) of the contact carrier arm (32) opposite the active contacts (2) with respect to the axis of rotation (33).

11. A mechanism according to claim 1, **characterised in that** the activation means (4) of the active contacts (2) comprises two piezoelectric linear motors (6), one for opening and the other for closing.

12. A mechanism according to claim 11, **characterised in that** the active contacts (2) are associated with a first end (31) of a contact carrier arm (32) disposed for rotation with respect to an axis (33), one of the piezoelectric linear motors (6) being disposed on the same side of the axis of rotation (33) as the active contacts (2), and the other being disposed proximate a second end of the contact carrier arm (32).

13. A mechanism according to claim 12, **characterised in that** a return spring (37) is associated with the contact carrier arm (32) in order to facilitate the opening and closing of the contacts (2,3) by the activation means (4).

14. A mechanism according to anyone of claims 1 to 13, **characterised in that** the passive contacts (3) are mounted translationally on a spring (34) along the axis of displacement of the active contacts (2).

15. A method of activating a mechanism according to claim 4, **characterized in that**, when the main circuit is closed, the mechanism performs the following successive steps:
- triggering of the request for opening the main power line (5) ;
- detecting the current in the main power line (5) ;
- switching the first time the current in the main power line goes to the reference value ;
- energizing the delay line (43) programmed previously according to the reference value and the speed of displacement of the piezoelectric motor (6) ;
- energizing the electric generator (39) ;
- and triggering the opening of the contacts (2,3) at an instant where the current in the main power line is equal to a value approximating zero.

16. A method of activating a mechanism according to claim 4, **characterised in that**, when the main circuit is open, the mechanism performs the following successive steps :
- triggering of the request for closing the main power line (5);
- detecting the voltage in the main power line (5) ;
- switching the first time the voltage in the main power line (5) goes to the reference value ;
- energizing the delay line (43) programmed previously according to the reference value and the speed of displacement of the piezoelectric motor (6) ;
- energizing the electric generator (39) ;
- and triggering the closing of the contacts (2,3) at an instant where the voltage in the main power line is equal to a value approximating zero.

17. A method of activating a mechanism according to claim 5, **characterised in that**, when the main circuit is closed, the mechanism performs the following successive steps :
- detecting the current in the main power line (5) ;
- comparing the measured current value with a threshold value ;
- and, if the value of the current measured on the main power line (5) is greater than the threshold value :
- switching the first time the current in the main power line goes to the reference value ;
- energizing the delay line (43) programmed previously according to the reference value and the speed of displacement of the piezoelectric motor;
- energizing the electric generator (39) ;
- and triggering the opening of the contacts (2,3) at an instant where the current in the main power line (5) is equal to a value approximating zero.

## Patentansprüche

1. Gerät des Typs Schalter-Überlastschalter (1), das auf eine Hauptleitung für pulsierenden Strom montiert ist, vorzugsweise Wechselstrom (5), das zwei Typen von Kontakten aufweist, aktiv(e) (2) und passiv(e) (3), wobei die aktiven Kontakte (2) mit Betätigungsmitteln (4) zum Öffnen und Schließen verbunden sind, wobei die Betätigungsmittel (4) mindestens einen piezoelektrischen Motor (6) aufweisen, der von Steuermitteln (7) gesteuert wird, **dadurch gekennzeichnet, dass** die Steuermittel (7) des piezoelektrischen Motors (6) in Serie einen mechanischen und/oder elektronischen Auslöser (40) der Öffnungs-Schließanfrage der Hauptleitung (5) für Strom, eine Umschaltvorrichtung (42), eine programmierbare Verzögerungsleitung (43) und einen elektrischen Generator (39), der den piezoelektrischen Motor versorgt (6), aufweisen.

2. Gerät nach Anspruch 1, **dadurch gekennzeichnet, dass** eine Überstromerfassungsvorrichtung (41) in der Hauptstromleitung (5) parallel zu dem Auslöser (40) montiert ist.

3. Gerät nach Anspruch 2, **dadurch gekennzeichnet, dass** die Steuermittel (7) des piezoelektrischen Motors (6) eine einzige Umschaltvorrichtung (42), eine einzige programmierbare Verzögerungsleitung (43) und einen einzigen elektrischen Generator (39), der den piezoelektrischen Motor (6) versorgt, umfassen.

4. Gerät nach einem der Ansprüche 1 bis 3, **dadurch gekennzeichnet, dass** die Umschaltvorrichtung (42) ein Mittel zum Erfassen (40) der Stromstärke und/oder der Spannung der Hauptstromleitung und einen Komparator (45) aufweist, der den Steuerschaltkreis des piezoelektrischen Motors (6) versorgt, wenn der Wert der Stromstärke und/oder der Spannung, der erfasst wird, gleich einem bestimmten Referenzwert ist.

5. Gerät nach einem der Ansprüche 2 bis 4, **dadurch gekennzeichnet, dass** die Überstromerfassungsvorrichtung (41) in der Hauptstromleitung ein Mittel zum Erfassen der Stromstärke der Hauptstromleitung und einen Komparator aufweist, der den Steuerschaltkreis des piezoelektrischen Motors versorgt, wenn der erfasste Stromstärkewert größer oder gleich einem bestimmten Schwellenwert ist.

6. Gerät nach Anspruch 1, **dadurch gekennzeichnet, dass** der piezoelektrische Motor (6) ein linearer Motor ist.

7. Gerät nach Anspruch 1, **dadurch gekennzeichnet, dass** der piezoelektrische Motor (6) ein Drehmotor ist.

8. Gerät nach Anspruch 6, **dadurch gekennzeichnet, dass** die aktiven Kontakte (2) mit einem Ende (31) eines Kontaktträgerarms (32) verbunden sind, der um eine Achse (33) drehbar montiert ist, wobei die Betätigungsmittel (4) in der Nähe des zweiten Endes (35) des Kontaktträgerarms (32) angeordnet sind.

9. Gerät nach Anspruch 7, **dadurch gekennzeichnet, dass** die aktiven Kontakte (2) mit einem Ende (31) eines Kontaktträgerarms (32) verbunden sind, der um eine Achse (33) drehbar montiert ist, wobei die Betätigungsmittel (4) auf der Rotationsachse (33) des Kontaktträgerarms (32) sind.

10. Gerät nach einem der Ansprüche 8 oder 9, **dadurch gekennzeichnet, dass** eine Rückholfeder (36) mit dem Ende (35) des Kontaktträgerarms (32) verbunden ist, der sich auf der den aktiven Kontakten (2) in Bezug auf die Rotationsachse (33) entgegengesetzten Seite befindet.

11. Gerät nach Anspruch 1, **dadurch gekennzeichnet, dass** die Betätigungsmittel (4) der aktiven Kontakte (2) zwei lineare piezoelektrische Motoren (6) aufweisen, einen für das Öffnen, den anderen für das Schließen.

12. Gerät nach Anspruch 11, **dadurch gekennzeichnet, dass** die aktiven Kontakte (2) mit einem Ende (31) eines Kontaktträgerarms (32) verbunden sind, der um eine Achse (33) drehbar montiert ist, wobei einer der linearen piezoelektrischen Motoren (6) auf der gleichen Seite der Rotationsachse (33) wie die aktiven Kontakte (2) angeordnet ist, und der andere in der Nähe des zweiten Endes des Kontaktträgerarms (32) angeordnet ist.

13. Gerät nach Anspruch 12, **dadurch gekennzeichnet, dass** eine Rückholfeder (37) mit dem Kontaktträgerarm (32) verbunden ist, um das Öffnen und das Schließen der Kontakte (2, 3) durch die Betätigungsmittel (4) zu erleichtern.

14. Gerät nach einem der Ansprüche 1 bis 13, **dadurch gekennzeichnet, dass** die passiven Kontakte (3) verschiebbar auf einer Feder (34) entlang der Verschiebungsachse der aktiven Kontakte (2) montiert sind.

15. Verfahren zum Betätigen eines Geräts nach Anspruch 4, **dadurch gekennzeichnet, dass** es bei geschlossenem Hauptschaltkreis die folgenden aufeinander folgenden Schritte aufweist:
- mechanisches und/oder elektronisches Auslösen der Öffnungsanfrage der Hauptstromleitung (5);
- Erfassen der Stärke der Hauptstromleitung (5);
- Umschalten beim ersten Übergang der Stromstärke der Hauptstromleitung auf den Referenzwert;
- Versorgung der zuvor in Abhängigkeit von dem Referenzwert und der Verschiebungsgeschwindigkeit des piezoelektrischen Motors (6) programmierten Verzögerungsleitung (43);
- Versorgung des elektrischen Generators (39);
- Auslösen des Öffnens der Kontakte (2, 3) in einem Augenblick, in dem die Stromstärke in der Hauptstromleitung (5) gleich einem bestimmten Wert, insbesondere in der Nähe von Null ist.

16. Verfahren zum Betätigen eines Geräts nach Anspruch 4, **dadurch gekennzeichnet, dass** es bei offenem Schaltkreis die folgenden aufeinander folgenden Schritte aufweist:
- mechanisches und/oder elektronisches Auslösen der Schließanfrage der Hauptstromleitung (5);
- Erfassen der Spannung der Hauptstromleitung (5);
- Umschalten beim ersten Übergang der Spannung der Hauptstromleitung (5) auf den Referenzwert;
- Versorgung der zuvor in Abhängigkeit von dem Referenzwert und der Verschiebungsgeschwindigkeit des piezoelektrischen Motors (6) programmierten Verzögerungsleitung (43);
- Versorgung des elektrischen Generators (39);
- Auslösen des Schließens der Kontakte (2, 3) in einem Augenblick, in dem die Spannung in der Hauptstromleitung (5) gleich einem bestimmten Wert, insbesondere in der Nähe von Null ist.

17. Verfahren zum Betätigen eines Geräts nach Anspruch 5, **dadurch gekennzeichnet, dass** es bei geschlossenem Hauptschaltkreis die folgenden aufeinander folgenden Schritte umfasst:
- Erfassen der Stromstärke der Hauptstromleitung (5);
- Vergleichen des gemessenen Stromstärkewerts mit einem Schwellenwert;
wenn der auf der Hauptstromleitung (5) gemessene Stromstärkewert größer ist als der Schwellenwert:
- Umschalten beim ersten Übergang der Stromstärke der Hauptstromleitung (5) auf den Referenzwert;
- Versorgung der zuvor in Abhängigkeit von dem Referenzwert und der Verschiebungsgeschwindigkeit des piezoelektrischen Motors (6) programmierten Verzögerungsleitung (43);
- Versorgung des elektrischen Generators (39);
- Auslösen des Öffnens der Kontakte (2, 3) in einem Augenblick, in dem die Stromstärke in der Hauptstromleitung (5) gleich einem bestimmten Wert, insbesondere in der Nähe von Null ist.
